Europäisches Patentamt

European Patent Office

Office européen des brevets

(19)

(11) **EP 0 600 798 B1**

(12) **FASCICULE DE BREVET EUROPEEN**

(45) Date de publication et mention
de la délivrance du brevet:
**14.08.1996 Bulletin 1996/33**

(51) Int. Cl.⁶: **B60Q 1/115**

(21) Numéro de dépôt: **93402923.2**

(22) Date de dépôt: **02.12.1993**

(54) **Dispositif de correction automatique de l'orientation des projecteurs d'un véhicle automobile lors des variations d'assiette du véhicule**

Automatische Scheinwerfereinstellung zur Korrektur des Einflusses der Neigungsveränderung einer Fahrzeugkarosserie auf die Richtung des Lichtbündels relativ zur Strasse

Automatic headlight adjustment correction by tilting, according to the position of the vehicle body relative to the ground

(84) Etats contractants désignés:
**DE ES GB IT**

(30) Priorité: **03.12.1992 FR 9214554**

(43) Date de publication de la demande:
**08.06.1994 Bulletin 1994/23**

(73) Titulaire: **VALEO VISION**
**93000 Bobigny (FR)**

(72) Inventeur: **Marois, Paul**
**F-75005 Paris (FR)**

(74) Mandataire: **Martin, Jean-Jacques et al**
**Cabinet REGIMBEAU**
**26, Avenue Kléber**
**75116 Paris (FR)**

(56) Documents cités:
**EP-A- 0 186 571**

## Description

La présente invention est relative à un dispositif de correction automatique de l'orientation des projecteurs d'un véhicule automobile lors des variations d'assiette du véhicule, notamment par suite d'un chargement déséquilibré du véhicule, d'une accélération ou d'une décélération (freinage) ou encore d'un changement abrupt, localisé ou répété, du profil de la route suivie par le véhicule. La demande de

brevet **EP-A-0 186 571** décrit un dispositif de ce type dans lequel un actuateur, associé à chaque projecteur, est capable de faire varier l'orientation de celui-ci par rapport à une direction de référence, constituée notamment par l'axe optique du projecteur, lorsqu'un capteur (constitué par une cellule photo-électrique de visée intégrée au projecteur et solidaire en mouvement de ce dernier, cette cellule visant un point - en pratique une région transversale très étroite de la route - situé en une position éloignée dans le champ d'éclairement du projecteur suivant une direction de visée qui fait un angle prédéterminé par rapport à l'axe optique du projecteur, lorsque celui-ci est orienté selon la direction de référence précitée) détecte une variation de luminance par suite d'une déviation angulaire de la direction visée par le capteur après une variation d'assiette du véhicule, qui provoque un rapprochement (comme dans le cas d'un freinage brusque) ou un éloignement (comme dans le cas d'une accélération brusque ou d'un chargement déséquilibré) de la direction visée.

Le signal de commande de l'actuateur est élaboré, à partir du signal engendré par le capteur, à l'aide de moyens de traitement appropriés.

Le dispositif objet de la demande précitée utilise également, pour chaque projecteur, un deuxième capteur, constitué par une deuxième cellule photo-électrique de visée, qui vise, dans le champ d'éclairement du projecteur, suivant une deuxième direction de visée faisant un angle également prédéterminé par rapport à l'axe optique, un deuxième point - en pratique une deuxième région transversale très étroite de la route - proche du véhicule pour s'affranchir des variations de luminance dues aux fluctuations gênantes de différents paramètres optiques, tels que les variations du coefficient de réflexion de la route (présence d'un revêtement routier de nature différente, etc.), de la tension d'alimentation de la lampe, du coefficient de transmission de la glace du projecteur, etc. En fait, dans ce cas, le rapport des luminances détectées suivant les deux directions de visée éloignée et proche est indépendant des fluctuations des différents paramètres susdits parce que ces fluctuations affectent les deux cellules de la même manière, c'est-à-dire avec les mêmes coefficients correctifs qui s'éliminent dans le rapport, mais dépend des variations d'assiette, en sorte que le signal de commande de l'actuateur est élaboré à partir de ce rapport de luminances.

Toujours dans la demande susdite, on utilise un troisième capteur, constitué par une troisième cellule photo-électrique de visée, qui vise, dans le champ d'éclairement du projecteur, suivant une troisième direction de visée intermédiaire entre les directions de visée éloignée et proche précitées, un troisième point (ou une troisième région) de la route, pour s'affranchir des variations accidentelles de luminance affectant de manière différente les deux cellules de visée éloignée et proche, mais qui ne sont pas dues à des variations d'assiette, et précisément pour s'affranchir des variations de luminance qui se produisent lorsque la cellule de visée éloignée est éblouie par la réflexion de la lumière sur un obstacle renvoyant la lumière sur la région éloignée visée par la cellule correspondante.

Dans ce cas, le traitement des signaux engendrés par les trois cellules de visée est basé sur le fait que, pour une même variation de l'assiette du véhicule, la variation de luminance est plus faible dans la région intermédiaire qu'en la région éloignée. Or, ce traitement des signaux n'est pas approprié à d'autres situations optiques aberrantes, c'est-à-dire ne correspondant pas à des variations réelles d'assiette, par exemple lorsque toutes les trois cellules seraient éblouies par réflexion de la lumière sur les bas-côtés dans un virage : en fait, dans ce cas les capteurs interprèteraient cette situation comme correspondant à une inclinaison vers l'avant et vers le bas de l'assiette du véhicule, c'est-à-dire comme si le véhicule "piquait du nez" lors d'un freinage brusque, alors qu'il n'en serait rien. Au demeurant, cette "interprétation" - correspondant à une situation purement optique et non pas à une situation mécanique réelle de variation d'assiette - ferait intervenir l'actuateur dans le sens de relever le projecteur, alors qu'il ne faudrait pas effectuer une telle correction, ce qui entraînerait un éblouissement des conducteurs des véhicules circulant dans le sens opposé.

Aussi, le problème technique à résoudre par la présente invention est celui d'un traitement des signaux engendrés par les capteurs qui - tout en étant capable de discriminer les variations de luminance dues aux fluctuations gênantes de différents paramètres optiques des variations de luminance dues aux changements réels d'assiette du véhicule (comme dans l'art antérieur) - soit aussi capable d'exclure sans équivoque toutes les situations optiques aberrantes, pour ne retenir que les situations optiques correspondant à des variations réelles d'assiette du véhicule, et ce tout en intervenant rapidement dans le cas particulièrement critique d'un freinage, c'est-à-dire dans une situation d'urgence dans laquelle on ne dispose pas plus d'une demi-seconde environ pour réagir et dans laquelle il faut donc conserver au conducteur le maximum de visibilité.

La solution de ce problème technique est basée sur le fait qu'une situation optique aberrante - qui, comme déjà évoqué plus haut, ne correspond pas à une variation réelle d'assiette - disparaît après quelques secondes, en sorte qu'il est possible de retarder raisonnablement la correction de l'orientation des projecteurs, pour ne l'effectuer que si la situation optique persiste après un laps de temps maximal de quelques secondes.

Evidemment, cette approche demeure valable essentiellement dans le cas de variations d'assiette qu'on peut qualifier de statiques ou lentes et pour lesquelles on peut tolérer une correction relativement différée dans le temps, telles que les variations d'assiette correspondant à un chargement déséquilibré du véhicule, qui se manifestent au moment de l'allumage des projecteurs, ou à un profil accidenté et persistant de la route, en sorte que pour couvrir également les variations d'assiette qu'on peut qualifier de dynamiques ou rapides, il faut prévoir des moyens validant - pratiquement sans délai - la situation optique, notamment en cas de freinage ou accélération brusques.

La présente invention a donc pour objet un dispositif de correction automatique de l'orientation d'au moins un projecteur de véhicule, lors des variations d'assiette de celui-ci, comprenant :

- au moins un premier et un deuxième capteurs d'éclairement intégrés au projecteur et solidaires en mouvement de ce dernier, ces premier et deuxième capteurs étant agencés pour détecter la luminance de la route dans le champ d'éclairement du projecteur suivant deux directions faisant deux angles prédéterminés par rapport à une direction de référence du projecteur et visant deux régions qui sont respectivement la plus proche et la plus éloignée du véhicule,
- un actuateur apte à faire varier l'inclinaison du projecteur par rapport au véhicule, et
- des moyens de traitement aptes à élaborer un signal de commande de l'actuateur à partir des signaux engendrés par les capteurs,

caractérisé en ce que :

- les moyens de traitement comprennent des moyens retardateurs de l'action du signal de commande sur l'actuateur, ne validant le signal de commande qu'après un laps de temps prédéterminé, par exemple de l'ordre de quelques secondes, et
- le dispositif de correction comprend en outre au moins un capteur de variation de vitesse du véhicule apte à court-circuiter les moyens retardateurs et à valider le signal de commande dès qu'il détecte une telle variation de vitesse, le capteur de variation de vitesse étant de préférence lui aussi intégré au projecteur.

Bien qu'en principe il s'agit de privilégier les situations de freinage notamment brusque - ce qui entraîne l'utilisation d'un capteur de décélération - il est clair qu'il n'y a pas lieu d'exclure les situations d'accélération surtout brusques, en sorte qu'il est avantageux de prévoir la possibilité de capter aussi les accélérations. A cet effet, on peut prévoir par exemple un capteur à détection piézoélectrique coopérant avec une masse - dite masse sismique - qui déforme, directement ou indirectement, ce capteur lors d'un freinage ou d'une accélération.

Un tel capteur à détection piézoélectrique possède la propriété de produire des charges électriques qu'il est possible de transformer en tension notamment à l'aide d'un circuit intégrateur recevant sur son entrée le signal fourni par le capteur de variation de vitesse, c'est-à-dire de décélération ou d'accélération, le signal présent à la sortie de ce circuit intégrateur étant reçu par un comparateur à hystérésis commandant le court-circuit des moyens retardateurs lorsque le capteur de décélération ou d'accélération détecte une variation de vitesse.

Conformément à l'invention, entre le premier capteur optique, visant la région la plus proche, et le deuxième capteur optique visant la région la plus éloignée, se trouvent **n-2, n ≧ 3**, capteurs optiques supplémentaires, visant des régions intermédiaires entre la plus proche et la plus éloignée, et les moyens de traitement effectuent le rapport à la luminance détectée par le premier capteur visant la région la plus proche de la luminance détectée par chacun des capteurs restants, visant chacune des régions intermédiaires jusqu'à la région la plus éloignée, les moyens de traitement comprenant en outre des moyens aptes à déterminer, à partir du signal relatif à chaque rapport précité, une valeur de l'angle d'inclinaison correspondant, ainsi que des moyens comparateurs aptes à comparer deux à deux entre eux les angles correspondant à ces rapports et à ne valider le signal de commande en amont des moyens retardateurs que lorsque ces angles sont identiques en signe et en valeur, les moyens retardateurs validant ensuite définitivement le signal de commande en cas de persistance de l'identité de signe et de valeur des angles d'inclinaison, ce qui correspond à des variations d'assiette statiques ou lentes, alors que le capteur de variation de vitesse valide immédiatement le signal de commande validé par les moyens comparateurs, tout en court-circuitant les moyens retardateurs, lorsque l'identité de signe et de valeur des angles d'inclinaison correspond à des variations d'assiette dynamiques ou rapides.

Encore conformément à l'invention, chacun des rapports précités est fourni par des moyens d'asservissement de gain commandés par le signal fourni par le premier capteur, lesdits moyens d'asservissement de gain commandant le gain d'une pluralité de circuits à gain variable, recevant chacun le signal issu des autres capteurs, respectivement, de telle sorte que ledit gain soit d'autant plus élevé que le signal issu des autres capteurs est faible, les moyens d'asservissement de gain comprenant un premier circuit intégrateur du signal fourni par le premier capteur et un moyen de comparaison de la tension de sortie dudit premier circuit intégrateur avec une tension de référence, les circuits recevant chacun le signal issu des autres capteurs comprenant chacun un autre circuit intégrateur, et la sortie dudit moyen de comparaison ajustant la durée d'intégration des autres circuits intégrateurs.

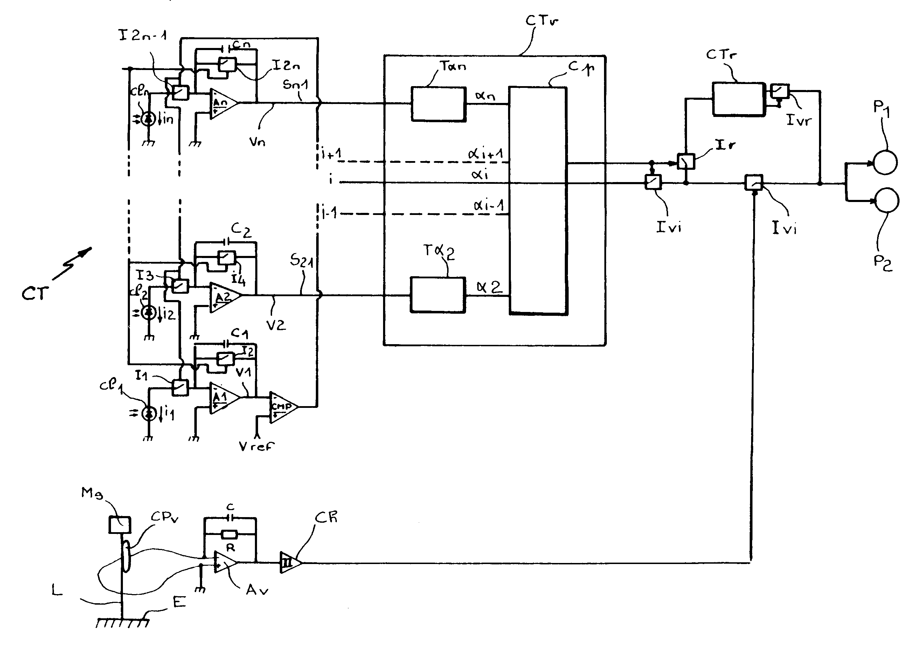

D'autres aspects, buts et avantages de la présente invention apparaîtront mieux à la lecture de la description détaillée suivante d'un mode de réalisation préférée de celle-ci, donnée à titre d'exemple et faite en référence au dessin annexé, sur lequel la figure unique est un schéma de principe d'un circuit électronique faisant partie d'un dispositif de correction selon l'invention et effectuant le traitement des signaux engendrés par les capteurs de visée de la route illuminée par les projecteurs.

Pour davantage de détails sur les composants essentiels d'un dispositif de correction, on renvoie au document précité **EP-A-0 186 571**.

En référence au dessin, le circuit de traitement précité, désigné dans son ensemble par la référence **CT**, comprend un premier amplificateur opérationnel **A₁**, dont l'entrée inverseuse est reliée à la borne d'entrée de courant d'une première cellule photo-électrique **CP₁** via un interrupteur commandé **I₁**. La cellule **CP₁** vise la route, dans le champ d'éclairement d'un projecteur associé (non représenté), selon une première direction de visée par rapport à une direction de référence (constituée de préférence par l'axe optique) d'un projecteur associé, en l'espèce un point (pour simplifier la description on parlera de "points" au lieu de régions ou bandes transversales étroites) de la route qui est le plus proche du véhicule (non représenté). La borne de sortie de courant de la cellule **CP₁** est à la masse. L'entrée non-inverseuse de **A₁** est elle aussi à la masse. Entre l'entrée inverseuse de **A₁** et sa sortie sont branchés en parallèle un condensateur **C₁** et un interrupteur commandé **I₂**.

La sortie de **A₁** est reliée à l'entrée négative d'un comparateur **CMP**. Sur l'entrée positive du comparateur **CMP** est appliquée une tension de référence, notée **Vref**, qui peut être fixe ou variable, comme on le verra plus loin.

Il est en outre prévu un second amplificateur opérationnel **A₂**, dont l'entrée inverseuse est reliée à la borne d'entrée de courant d'une deuxième cellule photo-électrique **CP₂** via un interrupteur commandé **I₃**. La cellule **CP₂** vise la route selon une deuxième direction de visée différente de la première, visant en l'espèce un point de la route intermédiaire entre le point le plus proche précité et un point le plus éloigné du véhicule, tel qui sera décrit ci-après. La borne de sortie de courant de **CP₂** est à la masse. L'entrée non-inverseuse de **A₂** est reliée elle aussi à la masse. Entre l'entrée inverseuse de **A₂** et sa sortie sont branchés en parallèle un condensateur **C₂** et un interrupteur commandé **I₄**.

Bien que le nombre minimal de cellules, nécessaires pour discriminer les variations de luminance dues aux fluctuations - déjà évoquées plus haut - de différents paramètres optiques parasites par rapport aux variations de luminance dues aux changements réels d'assiette du véhicule, soit égal à deux et que ce nombre suffit dans le cadre de la présente invention, on a envisagé le cas général où le circuit de traitement des signaux engendrés par les capteurs de visée de la route illuminée par les projecteurs comprend **n̲** capteurs, avec n≧3. C'est pour cette raison que le circuit de traitement illustre également un n-ième amplificateur opérationnel **Aₙ** dont l'entrée inverseuse est reliée à la borne d'entrée de courant d'une n-ième cellule photo-électrique **CPₙ** via un interrupteur commandé **I₂ₙ₋₁**. La cellule **CPₙ** vise la route selon une autre direction de visée, en l'espèce un point de la route qui est le plus éloigné du véhicule et qui a été évoqué plus haut. La borne de sortie de courant de **CPₙ** est à la masse. L'entrée non inverseuse de **Aₙ** est reliée elle aussi à la masse. Entre l'entrée inverseuse de **Aₙ** et sa sortie sont branchés en parallèle un condensateur **Cₙ** et un interrupteur commande **I₂ₙ**.

Entre la première cellule photo-électrique **CP₁** et l'n-ième **CPₙ**, il est donc préférable d'utiliser, dans le cadre de la présente invention, **n-2** autres cellules intermédiaires (donc au moins une cellule de visée intermédiaire, telle que **CP₂**, visant des points de la route situés dans le champ d'éclairement des projecteurs et correspondant à des zones intermédiaires entre la plus proche et la plus éloignée visées par **CP₁** et **CPₙ**, respectivement.

**V₁, V₂, ...., Vₙ** représentent les tensions existant à la sortie de **A₁, A₂, ...., Aₙ**, respectivement.

Les condensateurs **C₁, C₂, ....., Cₙ** ont préférentiellement les mêmes valeurs de capacité.

La sortie du comparateur **CMP** commande l'état ouvert ou fermé des interrupteurs **I₁, I₃, ...., I₂ₙ₋₁**.

Le circuit comprend aussi une borne d'entrée de rétablissement **RESET** qui commande l'état ouvert ou fermé des interrupteurs **I₂** et **I₄, ..., I₂ₙ**.

On observe que les circuits construits autour de **A₁, A₂, ..., Aₙ** sont respectivement des intégrateurs des courants traversant les cellules correspondantes **CP₁, CP₂, ...., CPₙ**. Ces n intégrateurs peuvent être réarmés en fermant les interrupteurs **I₂, I₄, ..., I₂ₙ** à l'aide de l'entrée **RESET**.

Il est facile de vérifier que le signal **V₂, ..., Vₙ** existant à la sortie de chacun des circuits construits autour des intégrateurs **A₂, ..., Aₙ**, respectivement, est proportionnel au rapport de la luminance détectée par les cellules **CP₂, ..., CPₙ**, respectivement, à la luminance détectée par la cellule **CP₁**, qui est donc prise comme cellule de référence. La démonstration est ici donnée limitativement au circuit construit autour de **A₂**, mais elle est valable - mutatis mutandis - pour l'i-ème circuit intégrateur, avec **i ≅ 2**.

Plus précisément, dans une configuration donnée, les courants **i₁** et **i₂** varient chacun en fonction de l'inclinaison α du projecteur, selon une courbe assimilable à une équation du second degré en α, ces courbes étant notées **k*i₁(α)** et **k*i₂(α)**, où **k** est une constante d'atténuation pour un environnement extérieur donné.

Le circuit décrit plus haut permet de déterminer l'inclinaison du projecteur de la façon suivante : supposons initialement que le projecteur soit incliné selon un angle α' et supposons en outre que, pendant l'intervalle de temps de la mesure, l'angle $\alpha'$ ne varie pas et les valeurs des courants $i_1$ et $i_2$ restent constantes.

Le circuit $A_1$ délivre alors une tension $V_1$ qui est égale à $k^*i_1(\alpha')^*t$, $t$ étant le temps.

Lorsque $V_1$ atteint $Vref$, soit $k^*i_1(\alpha')^*t = Vref$, on détermine le temps d'intégration $T_i$, qui est égal à $Vref/(k^*i_1(\alpha'))$.

La tension $V_2$ est donc égale à $k^*i_2(\alpha').T_i$, soit :

$$V_2 = Vref^*(i_2(\alpha')/i_1(\alpha')).$$

ce qui montre que chaque tension $V_i$, avec $i \geq 2$, est proportionnelle au rapport de la luminance détectée par la i-ème cellule $CP_i$ à la luminance détectée par la cellule de référence $CP_1$, parce que le rapport entre ces luminances est proportionnel au rapport entre les courants circulant dans les cellules correspondantes.

Ce rapport entre les courants en fonction de l'angle $\alpha$ évoluant selon une relation bijective avec ledit angle $\alpha$, la tension correspondante permet, par exemple par traitement approprié dans un microprocesseur (appel d'une courbe mémorisée point par point, opérations mathématiques), d'obtenir l'angle $\alpha'$.

Pour marquer le fait que le signal de sortie de l'i-ème circuit $A_i$, $i \geq 2$, est représentatif du rapport de la luminance détectée par la cellule $CP_i$ à la luminance détectée par la cellule $CP_1$ prise comme référence, on désigne ce rapport par $S_{i1}$. Chacun des signaux $S_{21}$, ..., $S_{n1}$ est un signal de commande des actuateurs $P_1$ et $P_2$ agissant sur les projecteurs associés.

La validation de chacun de ces signaux de commande nécessite la vérification de la cohérence des mesures correspondant à la détermination des signaux $S_{21}$, ...., $S_{n1}$.

Cette vérification peut être aisément obtenue lorsqu'on comprend donc que de chacun des signaux $S_{21}$, ..., $S_{n1}$ présents respectivement à la sortie des intégrateurs $A_2$, ..., $A_n$ on peut dériver directement - sur la base de ce qui précède - une valeur $\alpha_2$, ..., $\alpha_n$ respectivement de l'angle d'inclinaison correspondant à la situation optique détectée par chaque paire de cellules $CP_i$-$CP_1$, $i \geq 2$. Cette opération est effectuée à l'aide de moyens de calcul schématiquement représentés par les blocs $T\alpha_2$, ..., $T\alpha_n$, qui sont à la portée de l'homme du métier.

Il suffit alors de comparer entre elles, deux à deux, les valeurs $\alpha_2$, ..., $\alpha_n$ des angles d'inclinaison - ce qui est effectué à l'aide des moyens comparateurs $C_p$ illustrés eux aussi schématiquement sur le dessin et compris, conjointement avec les moyens $T\alpha_2$, ..., $T\alpha_n$, dans la partie $CT_v$ du circuit de traitement $CT$ qui se trouve en aval des circuits intégrateurs $A_1$, $A_2$, ..., $A_n$.

Il est ainsi possible de vérifier à chaque instant s'il y a cohérence en signe et valeur entre les angles d'inclinaison $\alpha_2$, ..., $\alpha_n$ déduits des signaux $S_{21}$, ..., $S_{n1}$ : lorsque cette cohérence, c'est-à-dire identité de signe et de valeur des angles $\alpha_2$, ..., $\alpha_n$, est vérifiée par rapport à la i-ème valeur $\alpha_i$, les moyens comparateurs $C_p$ valident l'actionnement des actuateurs $P_1$ et $P_2$ associés aux projecteurs du véhicule en fermant l'interrupteur $I_v$, commandé par eux.

Toutefois, étant donné que cette cohérence peut correspondre à une situation optique aberrante - comme déjà précisé plus haut - plutôt qu'à une variation réelle de l'assiette du véhicule, le circuit de traitement $CT$ prévoit un circuit retardateur $CT_r$ qui valide la commande des actuateurs en cas de persistance de l'identité de signe et de valeur des angles d'inclinaison $\alpha_2$, ..., $\alpha_n$, après un laps de temps maximal de quelques secondes imposé par les moyens retardateurs $CT_r$, en fermant l'interrupteur $I_{vr}$ commandé par eux.

Quant aux moyens retardateurs $CT_r$, ceux-ci peuvent être réalisés, dans leur forme la plus simple, par un compteur, qui est actionné par un interrupteur commandé $I_r$, fermé simultanément à l'interrupteur commandé $I_v$, et qui commande la fermeture de l'interrupteur précité $I_{vr}$ après un laps de temps préfixé, par exemple de quelques secondes (2 ou 3 secondes).

Toutefois, pour éviter de retarder indûment la correction de l'orientation des projecteurs (ou des seuls réflecteurs associés), dans le cas où la variation d'assiette du véhicule correspond à un freinage, surtout brusque, du véhicule - ainsi qu'à une accélération brusque - c'est-à-dire à des situations dans lesquelles il faut intervenir d'urgence, dans un laps de temps inférieur à la seconde, voire à la demi-seconde, de manière à effectuer la correction d'orientation requise et conserver ainsi la meilleure visibilité possible, en cas de freinage brusque notamment, ou éviter d'éblouir les conducteurs des véhicules circulant dans le sens opposé en cas d'accélération brusque par exemple, on prévoit dans le cadre de la présente invention des moyens de validation, pratiquement sans délai, de la commande des actuateurs $P_1$ et $P_2$ dès qu'une variation brusque de vitesse du véhicule a lieu.

Ces moyens comprennent un capteur de variation de vitesse $CP_v$, par exemple à détection piézoélectrique, qui présente l'avantage d'être réalisé en des dimensions très petites adaptées à l'intégration dans les projecteurs.

Un tel capteur est avantageusement réalisé - dans sa forme la plus simple - à l'aide d'une pastille piézoélectrique $CP_v$ appliquée, notamment par collage, sur une lame $L$, par exemple d'acier, dont une extrémité est fixée à une embase solidaire du véhicule (de préférence du projecteur - c'est-à-dire de l'enceinte $E$ enfermant le projecteur - auquel le capteur de variation de vitesse est intégré), alors que l'autre extrémité - qui est libre - porte une masse sismique $M_s$ sensible aux variations de vitesse, donc au freinage et à l'accélération. Un choix approprié de la rigidité de la lame (donc de son épaisseur pour une longueur et une matière données) et de la valeur de la masse permet d'exclure automatiquement les variations de vitesse lentes ou graduelles, c'est-à-dire qui ne sont pas dues notamment à des décélérations ou accélérations brusques et qui restent donc au-dessous d'un certain seuil préfixé.

Le signal engendré par le capteur de décélération ou d'accélération $CP_v$ est envoyé, par exemple, sur l'entrée d'un circuit intégrateur de courant $A_v$ (les valeurs de la résistance $R$ et de la capacité $C$ étant choisies de façon appropriée).

Le signal de sortie de $A_v$ est envoyé à l'entrée d'un comparateur à hystérésis $C_h$ commandant la fermeture de l'interrupteur $I_{vi}$, et donc le court-circuit des moyens retardateurs $CT_r$, lorsque le capteur $CP_v$ détecte une variation brusque de vitesse, validant ainsi la commande des actuateurs $P_1$ et $P_2$.

Il est donc clair que le traitement des signaux prévu dans le cadre de la présente invention gère les corrections dont le temps de réponse est supérieur à quelques secondes (2 ou 3 secondes environ), en effectuant le traitement des signaux optiques issus des cellules.

Ce traitement relatif aux informations d'origine purement opto-électronique est immédiatement interrompu si le capteur de freinage ou d'accélération $CP_v$ détecte une variation de vitesse brusque notamment, pour agir sans délai sur les actuateurs $P_1$ et $P_2$.

Après une telle interruption, le traitement des informations opto-électroniques est à nouveau effectué comme avant le freinage ou l'accélération, le dispositif de correction reprenant sa position initiale avec un léger amortissement correspondant au retour de l'assiette du véhicule à sa position première.

On va maintenant décrire le fonctionnement de base du circuit décrit ci-dessus.

Lorsque le projecteur associé est allumé et éclaire la route, chaque cellule $CP_1$, $CP_2$, ..., $CP_n$ reçoit, via un système de focalisation approprié (lentille ou analogue), une quantité de lumière proportionnelle à la luminance de la route selon la direction de visée qui lui est propre.

Initialement les interrupteurs $I_1$ à $I_{2n}$ sont fermés.

Lorsque les interrupteurs $I_2$, $I_4$, ..., $I_{2n}$ sont ouverts, par l'application d'une tension de commande appropriée sur l'entrée **RESET**, alors les tensions $V_1$, $V_2$, ..., $V_n$ en sortie respectivement de $A_1$, $A_2$, ..., $A_n$ croissent, leur valeur étant représentative de l'intégration dans le temps des courants $i_1$, $i_2$, ..., $i_n$ circulant dans les cellules $CP_1$, $CP_2$, ..., $CP_n$ et donc de la quantité de lumière reçue.

Lorsque $V_1$ atteint la valeur de référence **Vref**, alors la sortie de **CMP** bascule et les interrupteurs $I_1$, $I_3$, ..., $I_{2n-1}$ sont ouverts, pour bloquer simultanément la charge des condensateurs $C_1$, $C_2$, ..., $C_n$, ce qui a pour effet de figer les valeurs de tension $V_1$, $V_2$, ..., $V_n$, c'est-à-dire les signaux $S_{21}$, ..., $S_n$.

Les blocs $T\alpha_2$, ..., $T\alpha_n$ du circuit de traitement **CT**, prévus en aval des intégrateurs $A_1$, $A_2$, ..., $A_n$, exploitent alors les valeurs $S_{21}$, ..., $S_{n1}$ pour en déduire la valeur de l'angle d'inclinaison $\alpha$ du projecteur et pour effectuer une correction de l'orientation en site des projecteurs en fonction de cette valeur, si celle-ci est validée par le comparateur $C_p$ et par les moyens retardateurs $CT_r$ ou les moyens détecteurs de décélération (freinage) ou accélération $CP_v$.

Après ces opérations, les interrupteurs $I_2$, et $I_4$, ..., $I_{2n}$ sont à nouveau fermés par l'entrée **RESET** et un nouveau cycle de mesure peut commencer.

On comprend que le circuit ci-dessus réalise un asservissement du gain de la mesure de la luminance de la route. Plus précisément, plus le courant $i_2$, ..., $i_n$ est faible, - ce qui peut être dû par exemple à la nature du revêtement routier, à une atténuation de la lumière reçue par la glace du projecteur ou encore par une baisse de la tension d'alimentation de la lampe du projecteur, ou par un cumul de ces phénomènes -, plus la durée d'intégration est longue, cette durée étant déterminée par la valeur fixe de Vref et par la valeur moyenne de $i_2$, ..., $i_n$ respectivement.

Cette durée d'intégration étant également plus longue pour les circuits $A_2$, ..., $A_n$ respectivement (les durées d'intégration sont identiques), le gain de chaque circuit $A_2$, ..., $A_n$, déterminé comme le rapport entre $V_2$, ..., $V_n$ et la valeur moyenne de $i_2$, ..., $i_n$ respectivement est donc augmenté.

Inversement, lorsque la valeur de $i_1$ augmente, le gain des circuits $A_2$, ..., $A_n$ diminue.

Ainsi l'invention permet de modifier la sensibilité du circuit de mesure en fonction des conditions extérieures, pour ainsi s'affranchir des variations de luminance dues aux fluctuations des différents paramètres optiques parasites évoqués plus haut, en conservant à chaque fois une dynamique et un rapport signal-sur-bruit optimaux.

Un avantage du circuit de la présente invention réside en ce qu'il peut être aisément paramétré en fonction de l'environnement du correcteur.

En particulier, par un réglage de la valeur **Vref**, qui peut être effectué aisément à l'aide d'un potentiomètre ajustable ou analogue, on peut appliquer à la tension $V_i$, $i \geq 2$, un coefficient multiplicatif bien choisi de façon à compenser, d'un projecteur à un autre, les différences entre la quantité de la lumière reçue par les cellules, dues par exemple à des différences d'atténuation par la glace, à des différences de sensibilité des cellules, etc.

De plus, le circuit décrit ci-dessus peut être utilisé en fixant une valeur de **Vref** différente pour chaque mesure effectuée de $V_i$, $i \geq 2$. A chacune des valeurs successives $Vref_i$ de **Vref** est associée, par exemple dans une mémoire (non représentée) du circuit de traitement **CT**, une valeur $V_i$ que devrait prendre la tension $V_2$, ..., $V_n$ si le projecteur présente effectivement un angle d'inclinaison $\alpha_i$. Les différentes valeurs $Vref_i$ sont successivement balayées jusqu'à ce que la valeur de $V_2$, ..., $V_n$ corresponde effectivement à une valeur $V_i$, ce qui détermine l'angle courant $\alpha_i$ d'inclinaison du projecteur. Là encore, on s'affranchit des variations précitées de l'environnement du dispositif, en lui conservant une sensibilité maximale.

Alternativement, la valeur $Vref_i$ correspondant à l'angle d'inclinaison $\alpha_i$ peut être recherchée par approches successives.

En outre, une modification automatique de la valeur de **Vref** peut être envisagée pour modifier globalement la durée d'intégration $T_i$, et notamment pour augmenter cette durée lorsque l'état de la route est tel que la quantité de lumière reçue varie extrêmement rapidement. Les circuits $A_1$, $A_2$, ..., $A_n$ effectuent de la sorte un filtrage des signaux fournis par les deux cellules photoélectriques, en vue d'obtenir une série de mesures cohérentes les unes avec les autres.

Selon une autre variante, on peut prévoir qu'un microprocesseur incorporé au correcteur confronte à chaque mesure la valeur effective de $V_2$, ..., $V_n$ et la durée d'intégration $T_i$, qui peut être aisément déterminée à l'aide d'un compteur. Cette confrontation permet d'éliminer les valeurs mesurées qui ne sont pas significatives, notamment dans le cas où un obstacle se présente sur la route et que le courant $i_2$, ..., $i_n$ croît brusquement.

Bien entendu, la présente invention n'est nullement limitée à la forme de réalisation décrite ci-dessus et représentée sur le dessin, mais l'homme de l'art saura y apporter toute variante ou modification qui serait couverte par la portée des revendications annexées.

**Revendications**

1. Dispositif de correction automatique de l'orientation d'au moins un projecteur de véhicule automobile, lors des variations d'assiette de celui-ci, comprenant :

   - au moins un premier et un deuxième capteurs d'éclairement ($CP_1$, $CP_2$, ... $CP_n$) intégrés au projecteur et solidaires en mouvement de ce dernier, ces premier et deuxième capteurs étant agencés pour détecter la luminance de la route dans le champ d'éclairement du projecteur suivant deux directions faisant deux angles prédéterminés par rapport à une direction de référence du projecteur et visant deux régions qui sont respectivement la plus proche et la plus éloignée du véhicule,
   - un actuateur ($P_1$ ; $P_2$) apte à faire varier l'inclinaison du projecteur par rapport au véhicule, et
   - des moyens de traitement (CT) aptes à élaborer un signal de commande de l'actuateur ($P_1$ ; $P_2$) à partir des signaux engendrés par les capteurs ($CP_1$, $CP_2$, ..., $CP_n$), caractérisé en ce que :
   - les moyens de traitement (CT) comprennent des moyens retardateurs ($CT_r$) de l'action du signal de commande sur l'actuateur ($P_1$, $P_2$), ne validant le signal de commande qu'après un laps de temps prédéterminé, et
   - le dispositif de correction comprend en outre au moins un capteur ($CP_v$) de variation de vitesse du véhicule apte à court-circuiter les moyens retardateurs ($CT_r$) et à valider le signal de commande dès qu'il détecte une telle variation de vitesse.

2. Dispositif selon la revendication 1, caractérisé en ce que le capteur de variation de vitesse est un capteur à détection piézoélectrique ($CP_v$).

3. Dispositif selon la revendication 2, caractérisé en ce qu'il comprend une pastille piézoélectrique ($CP_v$), une lame (L) dont une extrémité est fixée à une embase (E) solidaire du véhicule et sur laquelle est appliquée cette pastille, ainsi qu'une masse sismique ($M_s$) fixée à l'autre extrémité de la lame (L).

4. Dispositif selon la revendication 3, caractérisé en ce que le capteur de variation de vitesse ($CP_v$) est lui aussi intégré au projecteur.

5. Dispositif selon l'une quelconque des revendications 3 ou 4, caractérisé en ce qu'il comporte un circuit intégrateur ($A_v$) recevant sur son entrée le signal fourni par le capteur, de décélération ou d'accélération ($CP_v$), le signal présent à la sortie de ce circuit intégrateur ($A_v$) étant reçu par un comparateur à hystérésis ($C_h$) commandant le court-circuit des moyens retardateurs ($CT_r$) lorsque le capteur, de décélération ou d'accélération ($CP_v$), détecte une variation de vitesse.

6. Dispositif selon l'une quelconque des revendications 1 à 5, caractérisé en ce que, entre le premier capteur optique ($CP_1$), visant la région la plus proche, et le deuxième capteur optique ($CP_n$) visant la région la plus éloignée, se trouvent (n-2), $n \geqq 3$, capteurs optiques supplémentaires ($CP_2$, ...) visant des régions intermédiaires entre la plus proche et la plus éloignée, et en ce que les moyens de traitement (CT) effectuent le rapport ($S_{21}$, ..., $S_{n1}$) à la luminance détectée par le premier capteur ($CP_1$) visant la région la plus proche de la luminance détectée par chacun des capteurs restants ($CP_2$, ..., $CP_n$) visant chacune des régions intermédiaires jusqu'à la région la plus éloignée, les moyens de traitement (CT) comprenant en outre des moyens ($T\alpha_2$, ..., $T\alpha_n$) aptes à déterminer, à partir du signal relatif à chaque rapport précité ($S_{21}$, ..., $S_{n1}$), une valeur de l'angle d'inclinaison correspondant ($\alpha_2$, ..., $\alpha_n$), ainsi que des moyens comparateurs ($C_p$) aptes à comparer deux à deux entre eux les angles ($\alpha_2$, ..., $\alpha_n$) correspondant à ces rapport ($S_{21}$, ..., $S_{n1}$) et à ne valider le signal de commande en amont des moyens retardateurs ($CT_r$) que lorsque ces angles ($\alpha_2$, ..., $\alpha_n$) sont identiques en signe et en valeur, les moyens retardateurs ($CT_r$) validant ensuite définitivement le signal de commande en cas de persistance de l'identité de signe et de valeur des angles d'inclinaison ($\alpha_2$, ..., $\alpha_n$), ce qui correspond à des variations d'assiette statiques ou lentes, alors que le capteur de variation de vitesse ($CP_c$) valide immédiatement le signal de commande validé par les moyens comparateurs ($C_p$), tout en court-circuitant les moyens retardateurs

(CT$_r$), lorsque l'identité de signe et de valeur des angles d'inclinaison ($\alpha_2$, ..., $\alpha_n$) correspond à des variations d'assiette dynamiques ou rapides.

7. Dispositif selon la revendication 6, caractérisé en ce que chacun des rapports précités (S$_{21}$, ..., S$_{n1}$) est fourni par des moyens d'asservissement de gain (A$_1$, C$_1$, CMP) commandés par le signal fourni par le premier capteur (CP$_1$), lesdits moyens d'asservissement de gain commandant le gain d'une pluralité de circuits à gain variable (A$_2$, C$_2$ ; ...; A$_n$, C$_n$) recevant chacun le signal issu des autres capteurs (CP$_2$, ..., CP$_n$), respectivement, de telle sorte que ledit gain soit d'autant plus élevé que le signal issu des autres capteurs (CP$_2$, ..., CP$_n$) est faible, les moyens d'asservissement de gain comprenant un premier circuit intégrateur (A$_1$, C$_1$) du signal fourni par le premier capteur (CP$_1$) et un moyen de comparaison (CMP) de la tension de sortie dudit premier circuit intégrateur (A$_1$, C$_1$) avec une tension de référence (Vref), en ce que les circuits recevant chacun le signal issu des autres capteurs (CP$_2$, ..., CP$_n$) comprennent chacun un autre circuit intégrateur (A$_2$, C$_2$ ; ...; A$_n$, C$_n$), et en ce que la sortie dudit moyen de comparaison ajuste la durée d'intégration des autres circuits intégrateurs (A$_2$, C$_2$; ...; A$_n$, C$_n$)

## Claims

1. Device for automatically correcting the orientation of at least one motor vehicle headlamp, when there are variations in the angle thereof, comprising:

   - at least first and second illumination sensors (CP$_1$, CP$_2$, ... CP$_n$) integrated into the headlamp and fixed so as to move with the latter, these first and second sensors being arranged so as to detect the luminance of the road in the field of illumination of the headlamp in two directions forming two predetermined angles with respect to a reference direction of the headlamp and aimed at two regions which are respectively the closest and the furthest away from the vehicle,

   - an actuator (P$_1$; P$_2$) suitable for varying the inclination of the headlamp with respect to the vehicle, and

   - processing means (CT) suitable for producing a signal controlling the actuator (P$_1$; P$_2$) from the signals generated by the sensors (CP$_1$, CP$_2$, ..., CP$_n$),

   characterised in that:

   - the processing means (CP) comprise means (CT$_r$) for delaying the action of the control signal on the actuator (P$_1$, P$_2$), validating the control signal only after a predetermined period of time, and

   - the correction device also comprises at least one sensor (CP$_v$) varying the speed of the vehicle, able to short-circuit the delay means (CP$_r$) and to validate the control signal as soon as it detects such a variation in speed.

2. Device according to Claim 1, characterised in that the speed variation sensor is a piezoelectric-detection sensor (CP$_v$).

3. Device according to Claim 2, characterised in that it comprises a piezoelectric chip (CP$_v$), a blade (L), one end of which is fixed to a base (E) fixed to the vehicle and against which this chip is applied, and a bob-weight (M$_s$) fixed to the other end of the blade (L).

4. Device according to Claim 3, characterised in that the speed variation sensor (CP$_v$) is also integrated into the headlamp.

5. Device according to either one of Claims 3 or 4, characterised in that it includes an integrating circuit (A$_v$) receiving at its input the signal supplied by the deceleration or acceleration sensor (CP$_v$), the signal at the output of this integrating circuit (A$_v$) being received by a hysteresis comparator (C$_h$) controlling the short-circuiting of the delay means (CT$_r$) when the deceleration or acceleration sensor (CP$_v$) detects a variation in speed.

6. Device according to any one of Claims 1 to 5, characterised in that, between the first optical sensor (CP$_1$) aimed at the closest region and the second optical sensor (CP$_n$) aimed at the region furthest away, there are (n-2), n≥3, additional optical sensors (CP$_2$, ...) aimed at regions intermediate between the closest and furthest away region, and in that the processing means (CT) produce the ratio (S$_{21}$ ..., S$_{n1}$) between the luminance detected by the first sensor (CP$_1$) aimed at the closest region and the luminance detected by each of the remaining sensors (CP$_2$, ..., CP$_n$) aimed at each of the intermediate regions as far as the furthest away region, the processing means (CT) also comprising means (T$\alpha_2$, ..., T$\alpha_n$) suitable for determining, from the signal relating to each aforementioned ratio (S$_{21}$, ..., S$_{n1}$), a value of the corresponding angle of inclination ($\alpha_2$, ..., $\alpha_n$), and comparison means (C$_p$) suitable for comparing with each other, in pairs, the angles ($\alpha_2$, ..., $\alpha_n$) corresponding to these ratios (S$_{21}$, ..., S$_{n1}$) and validating the control signal upstream of the delay means (CT$_r$) only when these angles ($\alpha_2$, ..., $\alpha_n$) are identical in sign and value, the delay means (CT$_r$) then definitively validating

the control signal in the event of the identity of sign and value of the angles of inclination ($\alpha_2$, ..., $\alpha_n$) continuing, which corresponds to static or slow variations in angle of the vehicle, whereas the speed variation sensor ($CP_c$) immediately validates the control signal validated by the comparison means ($C_p$), whilst short-circuiting the delay means ($CT_r$), when the identity of sign and value of the angles of inclination ($\alpha_2$, ..., $\alpha_n$) corresponds to dynamic or rapid variations in angle of the vehicle.

7. Device according to Claim 6, characterised in that each of the aforementioned ratios ($S_{21}$, ..., $S_{n1}$) is supplied by gain feedback means ($A_1$, $C_1$, CMP) controlled by the signal supplied by the first sensor ($CP_1$), the said gain feedback means controlling the gain of a plurality of variable-gain circuits ($A_2$, $C_2$; ...; $A_n$, $C_n$) each receiving the signal coming from the other sensors ($CP_1$, ..., $CP_n$), respectively, so that the weaker the signal coming from the other sensors ($CP_1$, ..., $CP_n$), the higher the gain, the gain feedback means comprising a first circuit ($A_1$, $C_1$) integrating the signal supplied by the first sensor ($CP_1$) and a means (CMP) of comparing the output voltage of the said first integrating circuit ($A_1$, $C_1$) with a reference voltage ($V_{ref}$), in that the circuits each receiving the signal coming from the other sensors ($CP_1$, ..., $CP_n$) each comprise another integrating circuit ($A_2$, $C_2$; ...; $A_n$, $C_n$), and in that the output of the said comparison means adjusts the period of integration of the other integrating circuits ($A_2$, $C_2$, ...; $A_n$, $C_n$).

**Patentansprüche**

1. Vorrichtung zur automatischen Einstellung wenigstens eines Kraftfahrzeugscheinwerfers zur Korrektur des Einflusses der Neigungsveränderung der Fahrzeugkarosserie auf die Richtung des Lichtbündels relativ zur Straße, bestehend aus:

   - wenigstens einem ersten und zweiten Beleuchtungssensor ($CP_1$, $CP_2$, ... $CP_n$) , die in den Scheinwerfer integriert und bewegungsfest mit diesem verbunden sind, wobei dieser erste und zweite Sensor zur Erfassung der Ausleuchtung der Straße im Beleuchtungsfeld des Scheinwerfers entlang zweier Richtungen angeordnet sind, die zwei vorgegebene Winkel im Verhältnis zu einer Bezugsrichtung des Scheinwerfers bilden, und auf zwei Bereiche zielen, die am nächsten am Fahrzeug bzw. am weitesten von ihm entfernt angeordnet sind,
   - einem Stellglied ($P_1$; $P_2$), das die Neigung des Scheinwerfers im Verhältnis zum Fahrzeug verstellen kann, und
   - Verarbeitungsmitteln (CT), um ein Steuersignal für das Stellglied ($P_1$; $P_2$), ausgehend von den durch die Sensoren ($CP_1$, $CP_2$, ..., $CP_n$) erzeugten Signalen, zu erarbeiten,

   **dadurch gekennzeichnet,** daß:

   - die Verarbeitungsmittel (CT) Verzögerungsmittel ($CT_r$) zur Verzögerung der Einwirkung des Steuersignals auf das Stellglied ($P_1$, $P_2$) umfassen, die das Steuersignal erst nach einer vorgegebenen Zeitspanne freigeben, und
   - die Korrekturvorrichtung außerdem wenigstens einen Sensor ($CP_v$) für die Veränderung der Fahrgeschwindigkeit des Fahrzeugs umfaßt, um die Verzögerungsmittel ($CT_r$) zu überbrücken und das Steuersignal freizugeben, sobald er eine solche Geschwindigkeitsänderung erfaßt.

2. Vorrichtung nach Anspruch 1 , **dadurch gekennzeichnet,** daß der Geschwindigkeitsänderungssensor ein Sensor mit piezoelektrischer Erfassung ($CP_v$) ist.

3. Vorrichtung nach Anspruch 2 , **dadurch gekennzeichnet**, daß sie ein piezoelektrisches Bauelement ($CP_v$), eine Platte (L), die mit einem Ende an einem fest mit dem Fahrzeug verbundenen Sockel (E) befestigt ist und auf der dieses Bauelement angebracht ist, sowie eine seismische Masse ($M_s$) umfaßt, die an dem anderen Ende der Platte (L) befestigt ist.

4. Vorrichtung nach Anspruch 3 , **dadurch gekennzeichnet,** daß der Geschwindigkeitsänderungssensor ($CP_v$) ebenfalls in den Scheinwerfer integriert ist.

5. Vorrichtung nach einem der Ansprüche 3 oder 4, **dadurch gekennzeichnet,** daß sie eine Integrierschaltung ($A_v$) umfaßt, die an ihrem Eingang das Signal empfängt, das durch den Verzögerungs- oder Beschleunigungssensor ($CP_v$) geliefert wird, wobei das am Ausgang dieser Integrierschaltung ($A_v$) anstehende Signal durch eine Hysteresevergleichsschaltung ($C_h$) empfangen wird, welche die Überbrückung der Verzögerungsmittel ($CT_r$) steuert, wenn der Verzögerungs- oder Beschleunigungssensor ($CP_v$) eine Geschwindigkeitsänderung erfaßt.

6. Vorrichtung nach einem der Ansprüche 1 bis 5, **dadurch gekennzeichnet,** daß sich zwischen dem ersten optischen Sensor ($CP_1$), der auf den am nächsten gelegenen Bereich zielt, und dem zweiten optischen Sensor ($CP_n$), der auf den am weitesten entfernten Bereich zielt, (n-2), n $\geq$ 3, zusätzliche optische Sensoren ($CP_2$,...) befinden, die auf Zwischenbereiche zwischen dem nächsten und dem am weitesten entfernten Bereich zielen, und daß die Verarbeitungsmittel (CT) das Verhältnis ($S_{21}$, ... $S_{n1}$) zwischen der Leuchtdichte, die durch den ersten Sensor ($CP_1$) erfaßt wird, der auf den am nächsten gelegenen Bereich zielt, und der Leuchtdichte erstellen, die durch jeden der übrigen Sensoren ($CP_2$, ..., $CP_n$) erfaßt wird, die jeweils auf Zwischenbereiche bis zu dem am weitesten entfernten Bereich zielen, wobei die Verarbeitungsmittel (CT) außerdem geeignete Mittel ($T\alpha_2$, ..., $T\alpha_n$) umfassen, um, ausgehend von dem Signal für jedes vorgenannte Verhältnis ($S_{21}$, ..., $S_{n1}$), einen Wert des entsprechenden Neigungswinkels ($\alpha_2$, ..., $\alpha_n$) zu bestimmen, sowie Vergleichsmittel ($C_p$), um die diesen Verhältniswerten ($S_{21}$, ..., $S_{n1}$) entsprechenden Winkel ($\alpha_2$, ..., $\alpha_n$) paarweise miteinander zu vergleichen und das Steuersignal vor den Verzögerungsmitteln ($CT_r$) nur dann freizugeben, wenn diese Winkel ($\alpha_2$, ..., $\alpha_n$) nach Vorzeichen und Wert identisch sind, woraufhin die Verzögerungsmittel ($CT_r$) dann das Steuersignal bei fortbestehender Identität von Vorzeichen und Wert der Neigungswinkel ($\alpha_2$, ..., $\alpha_n$) endgültig freigeben, was statischen oder langsamen Neigungsveränderungen der Fahrzeugkarosserie entspricht, während der Sensor für die Geschwindigkeitsänderung ($CP_c$) das durch die Vergleichsmittel ($C_p$) freigegebene Steuersignal mit gleichzeitiger Überbrückung der Verzögerungsmittel ($CT_r$) unverzüglich freigibt, wenn die Identität von Vorzeichen und Wert der Neigungswinkel ($\alpha_2$, ..., $\alpha_n$) dynamischen oder schnellen Neigungsveränderungen der Fahrzeugkarosserie entspricht.

7. Vorrichtung nach Anspruch 6 , **dadurch gekennzeichnet,** daß jeder der vorgenannten Verhältniswerte ($S_{21}$, ..., $S_{n1}$) durch Verstärkungsreglermittel ($A_1$, $C_1$, CMP) geliefert wird, die durch das vom ersten Sensor ($CP_1$) gelieferte Signal gesteuert werden, wobei die besagten Verstärkungsreglermittel die Verstärkung einer Mehrzahl von Schaltungen mit veränderlichem Verstärkungsfaktor ($A_2$, $C_2$; ...; $A_n$, $C_n$) steuern, die jeweils das von den anderen Sensoren ($CP_2$, ..., $CP_n$) kommende Signal empfangen, so daß der besagte Verstärkungsfaktor um so höher ist, je niedriger das von den anderen Sensoren ($CP_2$, ..., $CP_n$) kommende Signal ausfällt, wobei die Verstärkungsreglermittel eine erste Integrierschaltung ($A_1$, $C_1$) für das durch den ersten Sensor ($CP_1$) gelieferte Signal und ein Vergleichsmittel (CMP) für einen Vergleich der Ausgangsspannung der besagten ersten Integrierschaltung ($A_1$, $C_1$) mit einer Bezugsspannung (Vref) umfassen, daß die Schaltungen, die jeweils das von den anderen Sensoren ($CP_2$, ..., $CP_n$) kommende Signal empfangen, jeweils eine andere Integrierschaltung ($A_2$, $C_2$; ...; $A_n$, $C_n$) enthalten und daß der Ausgang des besagten Vergleichsmittels die Integrationsdauer der anderen Integrierschaltungen ($A_2$, $C_2$; ...; $A_n$, $C_n$) einstellt.